# EUROPÄISCHE PATENTSCHRIFT

(11) **EP 1 530 770 B1**
(45) Veröffentlichungstag und Bekanntmachung des Hinweises auf die Patenterteilung: **02.06.2010**
(21) Anmeldenummer: 03790712.8
(22) Anmeldetag: 11.08.2003
(51) Int. Cl.: G05B 13/02

(54) **VERFAHREN UND VORRICHTUNG ZUR PROZESSOPTIMIERUNG**
METHOD AND DEVICE FOR OPTIMIZING PROCESSES
PROCEDE ET DISPOSITIF POUR OPTIMISER UN PROCESSUS

(30) Priorität: 23.08.2002 DE 10238831
(43) Veröffentlichungstag der Anmeldung: 18.05.2005
(73) Patentinhaber: SIEMENS AKTIENGESELLSCHAFT, 80333 München (DE)
(72) Erfinder: BOURIANT, Alexandre, 76185 Karlsruhe (DE)
(86) Internationale Anmeldenummer: PCT/DE2003/002707
(87) Internationale Veröffentlichungsnummer: WO 2004/021229

(56) Entgegenhaltungen:
- EP-A- 0 500 997
- WO-A-02/19209
- DE-A- 19 519 627
- DE-A- 19 742 906

## Beschreibung

Die Erfindung betrifft eine Vorrichtung zur Prozessoptimierung gemäß dem Oberbegriff des Anspruchs 1.

Vorrichtungen zurProzessoptimierung sind z.B. aus der WO 02/19209 A2 und der DE 195 19 627 A1 bekannt.

In einer Fabrik ablaufende Prozesse, insbesondere Produktionsprozesse oder Herstellungsprozesse, werden in der Regel mit einem Kontroll- und Steuerungssystem, insbesondere mit einer PLT-Vorrichtung, gesteuert bzw. geregelt. Hinter der Abkürzung PLT-Vorrichtung verbirgt sich eine Prozess-Leit-Technik-Vorrichtung, wobei es sich hierbei zum Beispiel um ein SPS-Steuerungssystem handeln kann. Die betriebswirtschaftliche Planung eines in der Fabrik ablaufenden und mit Hilfe zum Beispiel einer PLT-Vorrichtung gesteuerten bzw. geregelten Prozesses erfolgt in der Regel mit einem Unternehmens- und Produktionsplanungssystem. Bei einem Unternehmens- und Produktionsplanungssystem handelt es sich zum Beispiel um eine sogenannten ERP-Vorrichtung. Hinter der Abkürzung ERP-Vorrichtung verbirgt sich eine Enterprise-Resource-Planning-Vorrichtung. Als Unternehmens- und Produktionsplanungssystem kann aber auch eine SCM-Vorrichtung - sogenannte Supply-Chain-Management-Vorrichtung - oder eine CPM-Vorrichtung - sogenannte Coloborative-Production-Manufacturing-Vorrichtung - zum Einsatz kommen. Mit Hilfe eines solchen zum Beispiel als ERP-Vorrichtung ausgebildeten Unternehmens- und Produktionsplanungssystems werden zum Beispiel für einen Herstellungsprozess benötigte Rohmaterialen bestellt. Um das zum Beispiel als PLT-Vorrichtung ausgebildete Kontroll- und Steuerungssystem mit dem zum Beispiel als ERP-Vorrichtung ausgebildeten Unternehmens- und Produktionsplanungssystem zu verbinden, und damit letztendlich den in der Fabrik ablaufenden Prozess zu optimieren, ist es aus dem Stand der Technik bereits bekannt, zwischen die PLT-Vorrichtung und die ERP-Vorrichtung eine sogenannte MES-Vorrichtung zu schalten. Hinter der Abkürzung MES-Vorrichtung verbirgt sich eine Manufacturing-Execution-System-Vorrichtung. Mit Hilfe einer solchen MES-Vorrichtung wird demnach eine Verbindung und ein Datenaustausch zwischen der betriebswirtschaftlichen ERP-Vorrichtung und der prozesstechnischen PLT-Vorrichtung geschaffen und damit letztendlich der über die PLT-Vorrichtung gesteuerte bzw. geregelte Prozess optimiert.

Wenn im folgenden auf eine ERP-Vorrichtung Bezug genommen wird, so soll hierunter auch ein als SCM-Vorrichtung oder als CPM-Vorrichtung ausgebildetes Unternehmens- und Produktionsplanungssystem verstanden werden können. Ebenso soll dann, wenn auf eine PLT-Vorrichtung Bezug genommen wird, auch ein anders ausgebildetes Kontroll- und Steuerungssystem gleichwertig herangezogen werden können.

Im Zusammenhang mit dem Einsatz einer MES-Vorrichtung ist es selbstverständlich von Interesse, ob sich die Investitionskosten für eine derartige MES-Vorrichtung durch die erzielte Optimierung der Produktion bezahlt machen. Mit anderen Worten ist es für eine Entscheidungsfindung, ob eine MES-Vorrichtung angeschafft wird oder nicht, für die Entscheidungsträger von Bedeutung, ob und in welchem Zeitrahmen für die MES-Vorrichtung ein Return of Investment realisiert werden kann.

Nach dem Stand der Technik stehen hierzu lediglich empirische Erfahrungswerte zur Verfügung. So werden geschätzte Return of Investment-Werte aus Vergleichsprojekten herangezogen, um zu entscheiden, ob für ein neues Projekt eine MES-Vorrichtung, nämlich eine Vorrichtung zur Prozessoptimierung, angeschafft wird oder nicht. Aus dem Stand der Technik sind jedoch keine Vorrichtungen zur Prozessoptimierung bzw. keine MES-Vorrichtungen bekannt, mit Hilfe derer Informationen über das mit Hilfe einer solchen Vorrichtung tatsächlich erzielte Return of Investment zur Verfügung gestellt werden können.

Hiervon ausgehend liegt der vorliegenden Erfindung das Problem zu Grunde, eine verbesserte Vorrichtung zur Prozessoptimierung sowie ein entsprechendes Verfahren und eine verbesserte MES-Vorrichtung zu schaffen.

Dieses Problem wird dadurch gelöst, dass die Eingangs genannte Vorrichtung durch die Merkmale des kennzeichnenden Teils des Anspruchs 1 weitergebildet ist.

Mit einer erfindungsgemäß ausgebildeten Vorrichtung sind Informationen über die bewirkte optimierung automatisch ermittelbar. Damit müssen Investitionsentscheidungen nicht mehr von empirischen Erfahrungswerten anhängig gemacht werden.

Nach einer vorteilhaften Weiterbildung der Erfindung ist jedem zu optimierenden Prozessparameter, der von einer oder mehreren Optimierungseinrichtungen beeinflusst wird, eine Auswerteeinrichtung zugeordnet, derart, dass von der Auswerteeinrichtung die von den entsprechenden Optimierungseinrichtungen bewirkte Optimierung des jeweiligen Prozessparameters online sowie in real-time ermittelbar ist. Hierdurch ist es möglich, das tatsächlich erzielte Return of Investment in Bezug auf jeden zu optimierenden Prozessparameter gezielt und unabhängig von den anderen Prozessparametern zu ermitteln und zu ananalysieren.

Nach einer bevorzugten Weiterbildung der Erfindung sind alle Auswerteeinrichtungen mit einer Gesamtauswerteeinrichtung verbunden sind, derart, dass von der Gesamtauswerteeinrichtung die bewirkte Gesamtoptimierung aller Prozessparameter online sowie in real-time ermittelbar ist. Dies ermöglicht eine einfache und automatische Ermittlung des von der erfindungsgemäßen Vorrichtung erzielten Gesamt-Return Of Investment.

Bevorzugte Weiterbildungen der Erfindung ergeben sich aus den abhängigen Unteransprüchen und der nachfolgenden Beschreibung. Ein Ausführungsbeispiel der Erfindung wird an Hand der Zeichnung näher erläutert. In der Zeichnung zeigt:
- Fig. 1: ein stark schematisiertes Blockschaltbild der erfin- dungsgemäßen Vorrichtung zur Prozessoptimierung zur Verdeutlichung der Abhängigkeiten und Wirkungszusam- menhänge zwischen mehreren Optimierungseinrichtungen und mehreren Prozessparametern bzw. den Prozesspara- metern zugeordneten Auswerteeinrichtungen,
- Fig. 2: ein Blockschaltbild einer Einrichtung zur Bestimmung einer Investmentkostenstruktur der erfindungsgemäßen Vorrichtung zur Prozessoptimierung,
- Fig. 3: ein Blockschaltbild eines Auswertemoduls einer Aus- werteeinrichtung der erfindungsgemäßen Vorrichtung zur Prozessoptimierung,
- Fig. 4: ein Blockschaltbild mehrerer miteinander verschalte- ter Auswertemodule,
- Fig. 5: ein Blockschaltbild mehrerer miteinander verschalte- ter Auswerteeinrichtungen,
- Fig. 6: ein Blockschaltbild einer Überwachungseinrichtung der erfindungsgemäßen Vorrichtung,
- Fig. 7: ein Blockschaltbild zur Verdeutlichung einer System- architektur-Variablenverteilung für die erfindungsge- mäße Vorrichtung zur Prozessoptimierung,
- Fig. 8: ein Blockschaltbild einer Zeitnormierungseinrichtung der erfindungsgemäßen Vorrichtung zur Prozessoptimie- rung,
- Fig. 9: ein Blockschaltbild einer weiteren Zeitnormierungs- einrichtung der erfindungsgemäßen Vorrichtung zur Prozessoptimierung,
- Fig. 10: ein Blockschaltbild einer Prozessgrößennormierungs- einrichtung der erfindungsgemäßen Vorrichtung zur Prozessoptimierung, und
- Fig. 11: eine Grafik zur Anzeige der von der erfindungsgemäßen Vorrichtung ermittelten Gesamtoptimierung sowie der von jeder beteiligten Optimierungseinrichtungen be- wirkten Optimierung.

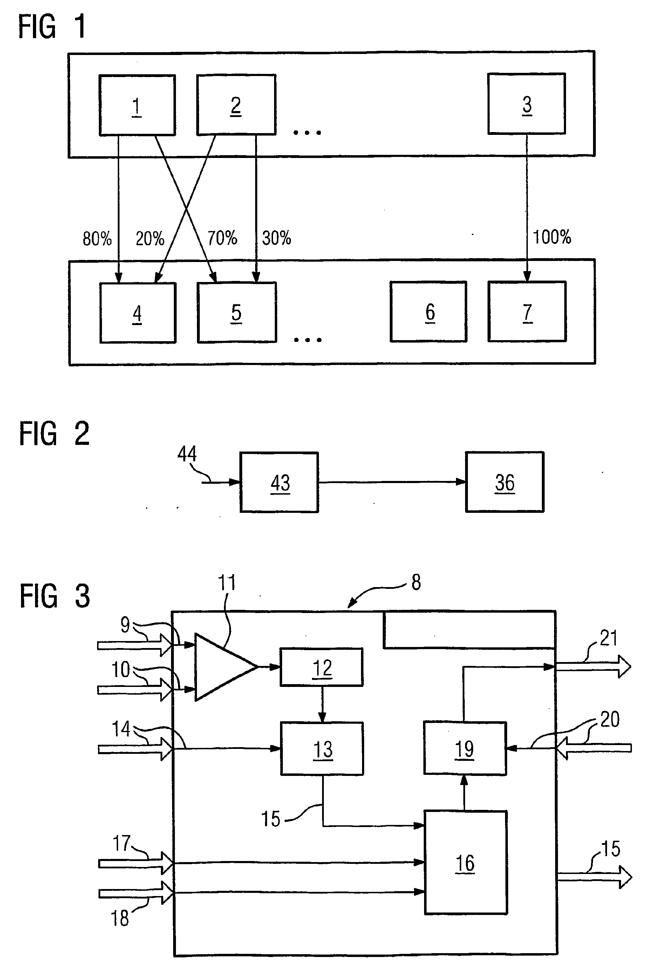

Fig. 1 zeigt ein stark schematisiertes Blockschaltbild einer erfindungsgemäßen Vorrichtung zur Prozessoptimierung bzw. einer erfindungsgemäßen MES-Vorrichtung. Gemäß Fig. 1 umfasst die erfindungsgemäße Vorrichtung mehrere Optimierungseinrichtungen 1, 2, 3, die auch als funktionale Komponenten der erfindungsgemäßen Vorrichtung, nämlich der erfindungsgemäßen MES-Vorrichtung, bezeichnet werden. Die Optimierungseinrichtungen 1, 2, 3 der erfindungsgemäßen MES-Vorrichtung beeinflussen im Detail nicht dargestellte Prozessparameter eines zum Beispiel in einer Fabrik ablaufenden und mit Hilfe einer PLT-Vorrichtung gesteuerten bzw. geregelten Prozesses. Im Sinne der Erfindung ist jedem zu optimierenden Prozessparameter eine Auswerteeinrichtung 4, 5, 6, 7 zugeordnet. Hinter den Auswerteeinrichtungen 4 bis 7 der Figur 1 verbergen sich demnach auch die zu optimierenden Prozessparameter. Wie in Figur 1 dargestellt ist, kann eine Optimierungseinrichtung 1, 2, 3 bzw. eine funktionale Komponente der erfindungsgemäßen MES-Vorrichtung Einfluss auf einen oder mehrere Prozessparameter haben. So zeigt Figur 1, dass eine Optimierungseinrichtung 1 sowohl auf den mit der Auswerteeinrichtung 4 zusammenwirkenden Prozessparameter als auch auf den mit der Auswerteeinrichtung 5 zusammenwirkenden Prozessparameter Einfluss ausübt. Die Optimierungseinrichtung 2 der Figur 1 beeinflusst ebenfalls den mit der Auswerteeinrichtung 4 und den mit der Auswerteeinrichtung 5 zusammenwirkenden jeweiligen Prozessparameter. Die Optimierungseinrichtung 3 hingegen beeinflusst lediglich den mit der Auswerteeinrichtung 7 zusammenwirkenden Prozessparameter. Einzelne zu optimierende Prozessparameter können demnach lediglich von einer Optimierungseinrichtung oder gleichzeitig von mehreren Optimierungseinrichtungen beeinflusst werden. In diesem Zusammenhang ist von Bedeutung, dass die Gesamtbeeinflussung eines Prozessparameters durch mehrere Optimierungseinrichtungen jedoch insgesamt immer nur 100 Prozent betragen kann. In dem in Figur 1 gezeigten Ausführungsbeispiel bedeutet dies, dass der mit der Auswerteeinrichtung 4 zusammenwirkenden Prozessparameter zum Beispiel von der Optimierungseinrichtung 1 zu 80 Prozent und von der Optimierungseinrichtung 2 zu 20 Prozent beeinflusst wird. Der mit der Auswerteeinrichtung 5 zusammenwirkende Prozessparameter wird zum Beispiel von der Optimierungseinrichtung 1 zu 70 Prozent und von der Optimierungseinrichtung 2 zu 30 Prozent beeinflusst. In jedem Fall ist jedoch die Summe aller von den Optimierungseinrichtungen auf einen einzelnen Prozessparameter einwirkenden Optimierungsanteile 100 Prozent. Für die Optimierungseinrichtung 3 bedeutet dies, dass der mit der Auswerteeinrichtung 7 zusammenwirkende Prozessparameter von der Optimierungseinrichtung 3 alleine und damit zu 100 Prozent beeinflusst wird.

Es liegt nun im Sinne der Erfindung, die von den einzelnen Optimierungseinrichtungen 1, 2, 3 der erfindungsgemäßen MES-Vorrichtung tatsächlich bewirkten Optimierungen der einzelnen Prozessparameter automatisch zu ermitteln, nämlich online sowie in real-time, sowie die ermittelten Optimierungen auch zu visualisieren.

Wie bereits erwähnt, ist hierzu jedem zu optimierenden Prozessparameter eine Auswerteeinrichtung 4, 5, 6, 7 zugeordnet. Die Auswerteeinrichtungen 4, 5, 6, 7 ermitteln aus Referenzwerten der Prozessparameter, die bei einem Prozess ohne vorhandene MES-Vorrichtung ermittelt wurden, und aus online ermittelten Werten der Prozessparameter tatsächlich bewirkte Optimierungen der entsprechenden Prozessparameter. Aus den tatsächlich bewirkten Optimierungen der einzelnen Prozessparameter lässt sich online sowie in real-time die von der erfindungsgemäßen Vorrichtung bewirkte Gesamtoptimierung ermitteln und so auf ein Return of Investment der gesamten Vorrichtung schließen.

Figur 3 zeigt ein Blockschaltbild eines Auswertemoduls 8 der Auswerteeinrichtungen 4, 5, 6 und 7. Mit einem derartigen Auswertemodul 8 lässt sich für jeden zu optimierenden Prozessparameter sowie für jede Optimierungseinrichtung getrennt die von einer einzelnen Optimierungseinrichtung bewirkte Optimierung eines einzelnen Prozessparameters ermitteln. Hierzu wird dem Auswertemodul 8 als erste Eingangsgröße 9 ein Referenzwert des konkreten Prozessparameters zugeführt. Bei diesem Referenzwert 9 handelt es sich um einen Wert für den konkreten Prozessparameter, der bei nicht Vorhandensein oder bei Inbetriebnahme bzw. unmittelbar nach der Inbetriebnahme der erfindungsgemäßen Vorrichtung zur Prozessoptimierung ermittelt wurde. Als zweite Eingangsgröße 10 wird dem Auswertemodul 8 ein onlinie sowie in real-time ermittelter tatsächlicher Wert des Prozessparameters zugeführt. In einem Komparator 11 des Auswertemoduls 8 werden die beiden Eingangsgrößen 9, 10 miteinander verglichen und es wird eine Differenz zwischen den beiden Eingangsgrößen 9, 10 ermittelt. Diese ermittelte Differenz wird in einem Speicher 12 bereit gehalten. Die Differenz zwischen den beiden Eingangsgrößen 9, 10, die im Speicher 12 bereit gehalten wird, wird vom Auswertemodul 8 einem Multiplikator 13 zugeführt. Der Multiplikator 13 verrechnet die Differenz zwischen den beiden Eingangsgrößen 9, 10 mit einer dritten Eingangsgröße 14. Dieser vom Multiplikator 13 ermittelte Wert bildet eine erste Ausgangsgröße 15 des Auswertemoduls 8.

Wie in Figur 3 dargestellt, wird die vom Multiplikator 13 bereit gestellte Ausgangsgröße jedoch zusätzlich auch einem Integrator 16 zugeführt. Neben dem vom Multiplikator 13 bereit gestellten Wert 15 werden dem Integrator 16 zwei weitere Eingangsgrößen 17, 18 des Auswertemoduls 8 zugeführt. Bei der Eingangsgröße 17 handelt es sich um eine Referenzzeit, bei der Eingangsgröße 18 um die aktuell ermittelte Zeit. Der Integrator 16 integriert die vom Multiplikator bereitgestellte Größe 15 über der Zeit zwischen der als Eingangsgröße 17 bereit gestellten Referenzzeit und der als Eingangsgröße 18 bereit gestellten aktuellen Zeit und führt diesen über der Zeit integrierten Wert einem Multiplikator 19 zu. Im Multiplikator 19 wird der vom Multiplikator 13 bereitgestellte Wert 15 und vom Integrator 16 über der Zeit integrierte Wert mit einer weiteren Eingangsgröße 20 des Auswertemoduls 8 multipliziert. Bei der Eingangsgröße 20 handelt es sich um den prozentualen Faktor, um welchen eine konkrete Optimierungseinrichtung 1, 2, 3 Einfluss auf einen Prozessparameter ausübt. Dieser prozentuale Faktor entspricht dem im Zusammenhang mit Figur 1 bereits erörterten Optimierungsanteil. Der vom Multiplikator 19 bereit gestellte Wert dient als zweite Ausgangsgröße 21 des Auswertemoduls 8.

An dieser Stelle sei nochmals darauf hingewiesen, dass es sich bei der Ausgangsgröße 15 des Auswertemoduls 8 um den unverrechneten Ausgang des Multiplikators 13 handelt. Es lieget jedoch auch im Sinne der Erfindung, das es sich bei der ersten Aushangsgröße 15 ebenso um den mit dem entsprechenden Optimierungsanteil gemäß Eingangsgröße 20 verrechneten Ausgang des Multiplikators 13 handeln kann. Auch können beide Werte, also der unverrechnete und der mit dem entsprechenden Optimierungsanteil verrechnete Ausgang des Multiplikators 13 als erste Ausgangsgröße bereitgestellt werden.

Wie bereits erwähnt, ist jedem zu optimierenden Prozessparameter eine Auswerteeinrichtung 4, 5, 6, 7 zugeordnet, die mehrere Auswertemodule 8 enthält. Die Auswerteeinrichtungen ermitteln für einen konkreten Prozessparameter eine von allen Optimierungseinrichtungen, die auf diesen konkreten Prozessparameter Einfluss haben, bewirkte Optimierung. Die einzelnen Auswertemodule 8 der Auswerteeinrichtungen 4, 5, 6 und 7 hingegen ermitteln dies für jede Optimierungseinrichtung einzeln. Wird demnach ein Prozessparameter von zwei Optimierungseinrichtungen beeinflusst, so umfasst die dem Prozessparameter zugeordnete Auswerteeinrichtung mindestens zwei Auswertemodule. Wird ein Prozessparameter von zwei Optimierungseinrichtungen zum Beispiel lediglich dahingehend beeinflusst, dass sich für den konkreten Prozessparameter infolge des Vorhandenseins der beiden Optimierungseinrichtungen lediglich eine Kostenersparnis ergibt, so sind lediglich zwei Auswertemodule 8 vorhanden. Würden hingegen die beiden Optimierungseinrichtungen sowohl Kostenersparnisse als auch Ertragssteigerungen in Bezug auf den jeweiligen Prozessparameter bewirken, so würde die dem Prozessparameter zugeordnete Auswerteeinrichtung insgesamt vier Auswertemodule umfassen, nämlich zwei Auswertemodule betreffend die Ertragssteigerung und zwei Auswertemodule betreffend die Kostenersparnis. Die Auswertemodule sind dann, wie in Figur 3 dargestellt, ausgebildet.

Bei dem in Figur 3 dargestellten Auswertemodul 8 kann es sich demnach um ein Auswertemodul zur automatischen Ermittlung einer bewirkten Ertragssteigerung in Bezug auf einen Prozessparameter handeln. Handelt es sich zum Beispiel bei dem zu optimierenden Prozessparameter um eine Anzahl von herstellbaren Produkten, so würde als Eingangsgröße 9 dem Auswertemodul 8 ein Referenzwert bereit gestellt, der die ohne MES-Vorrichtung herstellbare Anzahl von Produkten wiedergibt. Als Eingangsgröße 10 wird dem Auswertemodul 8 die bei Vorhandensein der erfindungsgemäßen MES-Vorrichtung aktuell hergestellte Anzahl von Produkten zugeführt. Im Sinne einer Optimierung ist die bei Vorhandensein der MES-Vorrichtung produzierte Anzahl von Produkten selbstverständlich größer als die ohne MES-Vorrichtung produzierbare Produktanzahl. In diesem Fall handelt es sich bei der Eingangsgröße 14 um den Gewinnanteil pro produziertem Produkt. Die Ausgangsgröße 15 des Auswertemoduls 8 ist in diesem Fall demnach eine mit Hilfe einer konkreten Optimierungseinrichtung erzielbare Ertragssteigerung bzw. Gewinnsteigerung in Bezug auf einen konkreten Prozessparameter.

In dem Fall, in dem es sich bei dem Auswertemodul 8 um ein Auswertemodul zur automatischen Ermittlung einer bewirkten Kostenersparnis handelt, wird als Eingangsgröße 9 dem Auswertemodul 8 zum Beispiel eine absolute Anzahl von ohne Vorhandensein der erfindungsgemäßen MES-Vorrichtung produzierten Ausschussteilen bereit gestellt. Als Eingangsgröße 10 hingegen werden die bei Vorhandensein der erfindungsgemäßen MES-Vorrichtung tatsächlich und aktuell produzierten Ausschussteile bereit gestellt. Im Sinne einer Optimierung sind die tatsächlich produzierten Ausschussteile selbstverständlich geringer als die ohne Vorhandensein der MES-Vorrichtung produzierten Ausschussteile. Diese vom Komparator 12 ermittelte Differenz wird dann mit der Eingangsgröße 14 multipliziert, bei der es sich in diesem Fall um eine Kostenersparnis pro Ausschussteil handelt.

Zum einen werden absolute Werte als Ausgangsgröße 15 bereit gehalten, zum anderen über der Zeit integrierte Werte als Ausgangsgröße 21 ermittelt.

Insgesamt soll demnach nochmals festgestellt werden, dass mit Hilfe des in Figur 3 dargestellten Auswertemoduls 8 die von einer konkreten Optimierungseinrichtung bewirkte Optimierung eines konkreten Prozessparameters ermittelt wird, und sowohl ein absoluter Optimierungswert als auch ein über die Zeit integrierter Optimierungswert als jeweilige Ausgangsgrößen 15, 21 bereit gestellt werden.

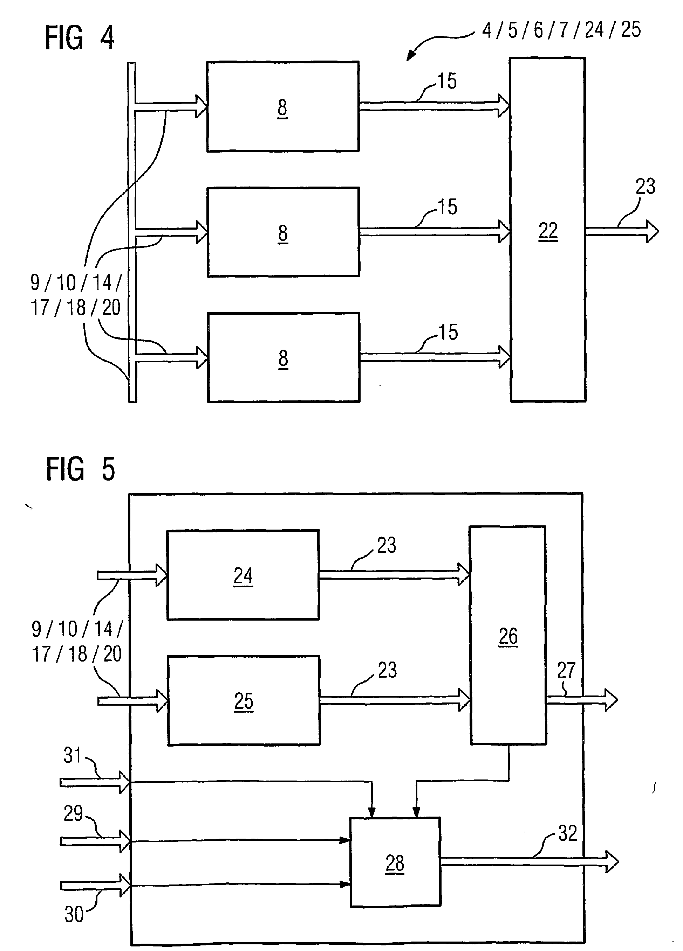

Gemäß Figur 4 sind in einer einem Prozessparameter zugeordneten Auswerteeinrichtung 4, 5, 6, 7 mehrere Auswertemodule 8 zusammengefasst. So zeigt Figur 4 eine Auswerteeinrichtung mit drei Auswertemodulen 8. Dies würde bedeuten, dass ein Prozessparameter, dem die Auswerteeinrichtung gemäß Figur 4 zugeordnet ist, zum Beispiel von drei Optimierungseinrichtungen der erfindungsgemäßen MES-Vorrichtung beeinflusst wird. Alle drei Optimierungseinrichtungen, deren tatsächlich bewirkte Optimierung des entsprechenden Prozessparameters von den Auswertemodulen 8 ermittelt wird, trägt einen Anteil zur Optimierung des Parameters bei. Die absoluten Ausgangsgrößen 15 der Auswertemodule 8 werden demnach einem Summierer 22 zugeführt, der die Ausgangsgrößen 15 der Auswertemodule 8 summiert und so als Ausgangsgröße 23 eine von allen beteiligten Optimierungseinrichtungen bewirkte absolute Optimierung des entsprechenden Prozessparameters bereitstellt.

Figur 5 zeigt ein Blockschaltbild mehrerer miteinander verschalteter Auswerteeinrichtungen 24, 25, die wie in Figur 4 dargestellt, ausgebildet sind. Die beiden Auswerteeinrichtungen 24, 25 sind mit einer Gesamtauswerteeinrichtung verbunden, wobei sich hierdurch die bewirkte Gesamtoptimierung aller Prozessparameter online sowie in real-time ermitteln lässt. Hierzu werden die Ausgangsgrößen 23 der Auswerteeinrichtungen 24, 25 einem Summierer 26 zugeführt, der die mit Hilfe der Auswerteeinrichtungen 24, 25 ermittelte, bewirkte Optimierung der einzelnen Prozessparameter derart miteinander verrechnet, dass eine bewirkte absolute Gesamtoptimierung aller Prozessparameter ermittelbar ist. Diese absolute, bewirkte Gesamtoptimierung aller Prozessparameter stellt der Summierer 26 als Ausgangsgröße 27 bereit. Diese Ausgangsgröße des Summiereres 26 wird des weiteren einem Integrator 28 zugeführt. Dem Integrator 28 werden als weitere Eingangsgrößen 29, 30, 31 Zeitvariablen zugeführt. Bei der Eingangsgröße 29 handelt es sich um eine Referenzzeit, nämlich um die Zeit, zu welcher die MES-Vorrichtung in Betrieb genommen worden ist. Bei der Eingangsgröße 30 handelt es sich um die aktuell gemessene Zeit. Bei der Eingangsgröße 31 handelt es sich um eine Ausgangsgröße einer Zeitnormierungseinrichtung, auf die weiter unten im Detail eingegangen wird. Aus der Ausgangsgröße des Summierers 26 und den Eingangsgrößen 29, 30 und 31 ermittelt der Integrator 28 eine zeitbezogene Gesamtoptimierung aller Prozessparameter. Dieser Wert wird als Ausgangsgröße 32 bereit gestellt.

Es liegt demnach im Sinne der Erfindung, eine MES-Vorrichtung bereitzustellen, wobei die MES-Vorrichtung mehrere Optimierungseinrichtungen umfasst, wobei jede der Optimierungseinrichtungen einen oder mehrere Prozessparameter optimiert. Jedem der Prozessparameter ist eine Auswerteeinrichtung zugeordnet. Die Auswerteeinrichtung ermittelt die von den Optimierungseinrichtungen tatsächlich bewirkte Optimierung des jeweiligen Prozessparameters online sowie in real-time. Um des weiteren Detailinformationen darüber zu erhalten, inwieweit ein Prozessparameter von den einzelnen auf diesen Prozessparameter einwirkenden Optimierungseinrichtungen beeinflusst wird, verfügt jede Auswerteeinrichtung über mehrere Auswertemodule. So ist mit den Auswertemodulen die Optimierungswirkung einer konkreten Optimierungseinrichtung auf einen konkreten Prozessparameter ermittelbar. Die Auswerteeinrichtungen ermitteln dann aus den Ausgangsgrößen der Auswertemodule die von den entsprechend beteiligten Optimierungseinrichtungen bewirkte Optimierung eines konkreten Prozessparameters. In dem Summierer 26 sowie dem Integrator 28, die zusammen eine Gesamtauswerteeinrichtung bereitstellen, werden dann die Ausgangssignale der Auswerteeinrichtungen miteinander verrechnet, so dass eine bewirkte Gesamtoptimierung aller Prozessparameter online sowie in real-time automatisch ermittelt wird.

In einem konkreten Anwendungsfall kann auf diese Art und Weise das mit Hilfe der MES-Vorrichtung erzielte Return of Investment online sowie in real-time ermittelt werden. So ist mit Hilfe der Auswertemodule ermittelbar, welchen Return of Investment-Anteil jede Optimierungseinrichtung der MES-Vorrichtung in Bezug auf einen konkreten Prozessparameter bereitstellt. Die Auswerteeinrichtungen ermitteln einen Wert, der dem erzielten Return of Investment aller in Bezug auf einen konkreten Prozessparameter beteiligter Optimierungseinrichtungen der MES-Vorrichtung entspricht. Über den Summierer 26 und den Integrator 28 der Gesamtauswerteeinrichtung wird das gesamte erzielte Return of Investment der MES-Vorrichtung über alle Prozessparameter ermittelt. Dadurch lässt sich das Investitionsziel bzw. der Investitionswert einer MES-Vorrichtung gezielt für alle Optimierungseinrichtungen der MES-Vorrichtungen auswerten. Es ist ermittelbar, welche Optimierungseinrichtung der MES-Vorrichtung in Bezug auf eine Optimierung des Prozesses bzw. in Bezug auf eine Amortisierung der Investitionskosten den größten Einfluss hat. Das Return of Investment einer MES-Vorrichtung muss dann nicht mehr aufgrund empirischer Daten abgeschätzt werden, vielmehr kann das Return of Investment jederzeit aktuell ermittelt werden.

Wie bereits im Zusammenhang mit Figur 3 erläutert, müssen den Auswertemodulen hierzu aktuelle Werte über die Prozessparameter als Eingangsgrößen 10 bereit gestellt werden.

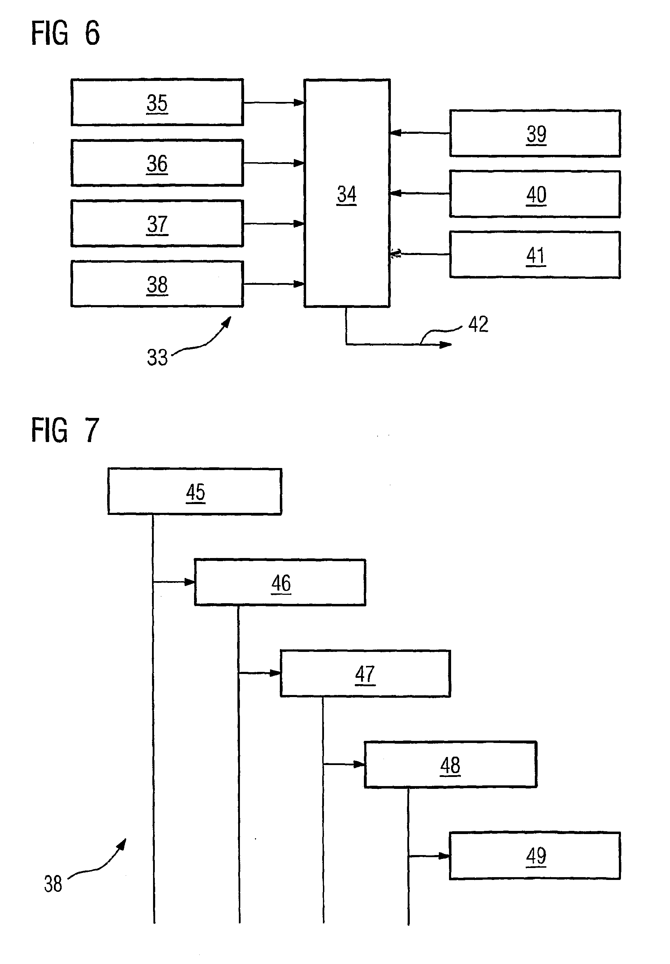

Figur 6 zeigt eine Datenermittlungseinrichtung 33, mit Hilfe derer zum einen die aktuellen Prozessparameter überwacht und deren Werte ermittelt werden können, und mit Hilfe derer zum anderen weitere für die Ermittlung des konkret erzielten Optimierungserfolgs bzw. des aktuelle erzielten Return of Investments notwendige Variablen bzw. Informationen erfasst werden können. So umfasst die Datenermittlungseinrichtung 33 einen universellen Datenbrowser 34. Dem Datenbrowser 34 werden mehrere Eingangsgrößen bereit gestellt. Bei einer ersten Eingangsgröße 35 handelt es sich um die aktuellen Werte der zu optimierenden Prozessparameter. Diese werden mit nicht dargestellten Sensoren an der PLT-Vorrichtung gemessen und dann dem Datenbrowser 34 bereit gestellt. Als zweite Eingangsgröße 36 werden dem Datenbrowser 34 Variablen der MES-Vorrichtung bereit gestellt. Bei diesen Variablen des MES-Systems kann es sich zum Beispiel um die Anschaffungszeit und den Anschaffungswert der einzelnen Optimierungseinrichtungen der MES-Vorrichtung handeln. Als dritte Eingangsgröße 37 werden dem Datenbrowser 34 Variablen der ERP-Vorrichtung bereit gestellt. Hierbei handelt es sich um betriebswirtschaftliche Daten, wie zum Beispiel Stückkosten von im Prozess verwendeten Rohmaterialien, Verkaufspreisen oder dergleichen. Als weitere Eingangsgröße 38 werden dem Datenbrowser 34, falls erforderlich, Informationen über eine Systemarchitektur der PLT-Vorrichtung bereitgestellt. Hierauf wird später im Zusammenhang mit Figur 7 im größeren Detail eingegangen. Bei den Eingangsgrößen 39 kann es sich zum Beispiel um Systemeingaben einer Bedienperson handeln. Bei den Eingangsgrößen 40 kann es sich um Informationen handeln, die dem Datenbrowser 34 von einem Parallelsystem in der Produktion bereit gestellt werden. Bei den Eingangsgrößen 41 handelt es sich um weitere Variablen, die keinem der anderen Eingangsgrößen zugeordnet werden können.

All diese Eingangsgrößen 35, 36, 37, 38, 39, 40 und 41 des Datenbrowsers 34 werden im Datenbrowser 34 zugänglich gemacht und als Ausgangsgröße 42 den Auswerteeinrichtungen bzw. Auswertemodulen bereit gestellt. Die Auswertemodule bzw. Auswerteeinrichtungen sind dann in der Lage, die aktuell bewirkte Optimierung bzw. das aktuell erzielte Return of Investment der erfindungsgemäßen Vorrichtung bzw. erfindungsgemäßen MES-Vorrichtung zu ermitteln.

Unter die im Zusammenhang mit Figur 6 erwähnten Eingangsgrößen 36 des Datenbrowsers 34 kann zum Beispiel die in Figur 2 dargestellte Investmentkostenstruktur der erfindungsgemäßen MES-Vorrichtung fallen. Um nämlich die aktuell erzielte Optimierung bzw. das aktuell erzielte Return of Investment korrekt ermitteln zu können, müssen den Auswerteeinrichtungen Eingangsgrößen bereit gestellt werden, die Informationen bzw. Daten über die Investmentkostenstruktur der erfindungsgemäßen Vorrichtung zur Prozessoptimierung enthalten. So ist nicht nur von Bedeutung, wie hoch die Investmentkosten der gesamten Vorrichtung zur Prozessoptimierung sind, vielmehr müssen auch Daten darüber bereit gestellt werden, wie sich diese Investmentkosten auf die einzelnen Optimierungseinrichtungen der erfindungsgemäßen Vorrichtung verteilen. Ferner müssen solche Daten berücksichtigt werden, die die aufgrund der aktuellen Rechtslage mögliche Abschreibung der Investitionskosten berücksichtigen. Nur unter Verwendung bzw. Zugrundelegung dieser Daten lässt sich die erfindungsgemäße Ermittlung der bewirkten Optimierung korrekt durchführen. So ist in einer Datenbank 43 ein Amortisierungsmodell der Investitionskosten der gesamten erfindungsgemäßen Vorrichtung sowie der einzelnen Optimierungseinrichtungen derselben abgelegt. Als Eingangsgröße 44 werden der Datenbank die Investitionskosten aufgesplittet nach den einzelnen Optimierungseinrichtungen zugeführt. Aus dem in der Datenbank 43 abgelegten Amortisierungsmodell und den Investitionskosten wird dann die Eingangsgröße 36 für den Datenbrowser 34 ermittelt. Hierbei handelt es sich dann um die Investmentkostenstruktur der erfindungsgemäßen Vorrichtung zur Prozessoptimierung bzw. der erfindungsgemäßen MES-Vorrichtung. In dieser Investmentkostenstruktur sind die Anschaffungskosten der gesamten MES-Vorrichtung sowie aller Komponenten derselben abgelegt. Darüber hinaus sind diese Investmentkosten auf Basis der gesetzlichen Anforderungen und der gesetzlichen Abschreibungsmöglichkeiten zeitlich aufgesplittet.

Figur 7 zeigt die bereits in Figur 6 erwähnte Eingangsgröße 38, die Informationen über eine Systemarchitektur der PLT-Vorrichtung enthält. So ist es bei komplexen Herstellungsprozessen sowie Produktionsanlagen erforderlich, das Gesamtsystem zu strukturieren. Nur so lassen sich die erforderlichen Eingangsgrößen der erfindungsgemäßen Vorrichtung korrekt ermitteln. So verdeutlicht Figur 7 einen mit Hilfe einer PLT-Vorrichtung gesteuerten Produktionsprozess, der in fünf Hierarchiestufen 45, 46, 47, 48, 49 untergliedert ist. Bei der obersten Hierarchiestufe 45 handelt es sich um die gesamte Produktionsanlage. Diese kann in mehrere Produktionseinheiten untergliedert sein, die dann die zweite Hierarchiestufe 46 darstellen. Jede Produktionseinheit kann in mehrere Bereiche aufgegliedert sein, welche die dritte Hierarchiestufe 47 bilden. Innerhalb jedes Bereichs können mehrere Zellen und innerhalb der Zellen die konkreten Vorrichtungen bzw. Ausrüstungen der Anlage vorhanden sein. Die Zellen bilden die vierte Hierarchiestufe 48 und die konkreten Einrichtungen bilden die fünfte Hierarchiestufe 59. Im Sinne der Erfindung ist es nun möglich, dass die Optimierungseinrichtungen der erfindungsgemäßen Vorrichtung zur Prozessoptimierung auf unterschiedliche Hierarchiestufen 45, 46, 47, 48 oder 49 des Gesamtprozesses Einfluss haben.

Hat zum Beispiel eine Optimierungseinrichtung Einfluss auf die dritte Hierarchiestufe 47, so werden alle Einrichtungen der untergeordneten Hierarchiestufen 48 und 49 von der Optimierungseinrichtung beeinflusst. Diese Information ist erforderlich, um die von einer Optimierungseinrichtung tatsächlich bewirkte Optimierung der Gesamtanlage ermitteln zu können. Ferner ist eine derartige Systemarchitektur für die Überwachung und Übermittlung der Prozessparameter erforderlich. So lässt sich bei komplexen zu optimierenden Prozessen nur mit Hilfe einer solchen Systemarchitektur bestimmen, in welche Hierarchieebene ein Prozessparameter ermittelbar ist.

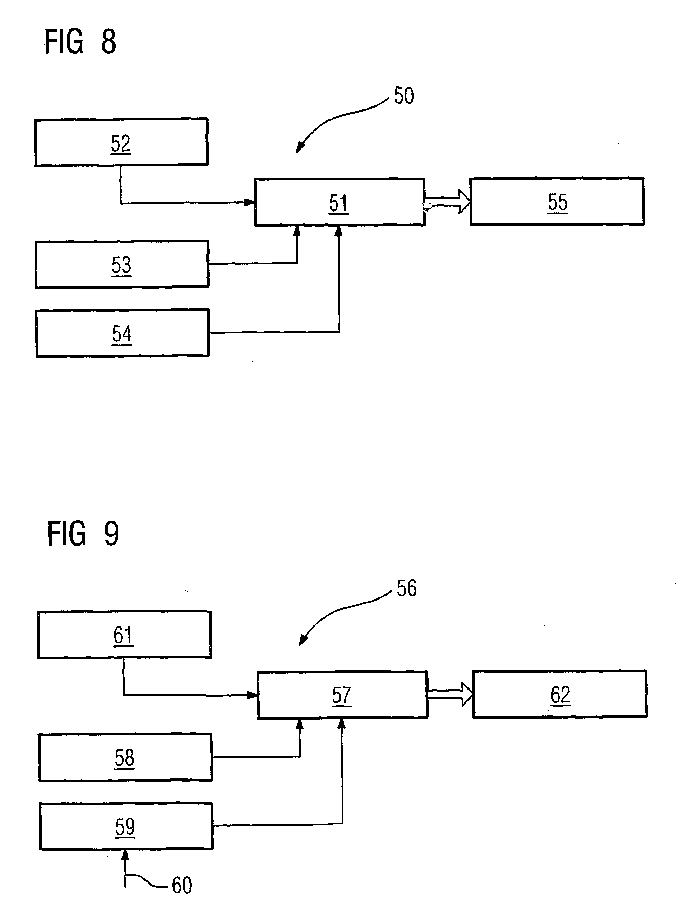

Figur 8 veranschaulicht eine Zeitnormierungseinrichtung 50 der erfindungsgemäßen Vorrichtung zur Prozessoptimierung. Bei der in Figur 8 gezeigten Zeitnormierungseinrichtung 50 handelt es sich um eine Zeitnormierungseinrichtung für die gesamte MES-Vorrichtung. So werden einem Zeitnormierer 51 insgesamt drei Eingangsgrößen 52, 53, 54 zugeführt. Bei der Eingangsgröße 52 handelt es sich um eine Benutzereingabe. So kann von einer Bedienperson die Zeitbasis ausgewählt werden, auf welcher die Zeitnormierung durchgeführt werden soll. So kann nämlich eine Zeitnormierung auf Basis von Tagen, Wochen, Monaten oder Jahren erfolgen. Bei der Eingangsgröße 53 handelt es sich um eine Referenzzeit. Dies ist die Zeit, zu der die gesamte MES-Vorrichtung oder die erste Komponente derselben in Betrieb genommen worden ist. Bei der Eingangsgröße 54 handelt es sich um die aktuell gemessene Zeit. Aus diesen Eingangsgrößen 52, 53 und 54 ermittelt der Zeitnormierer 51 eine Ausgangsgröße 55. Bei dieser Ausgangsgröße 55 handelt es sich um eine normierte Zeitvariable, die für die gesamte MES-Vorrichtung gültig ist. So entspricht die Ausgangsgröße 55 gemäß Figur 8 der Eingangsgröße 31 gemäß Figur 5.

Figur 9 zeigt eine weitere Zeitnormierungseinrichtung 56. Bei dieser Zeitnormierungseinrichtung 56 handelt es sich jedoch nicht um eine Zeitnormierungseinrichtung für die gesamte MES-Vorrichtung, sondern vielmehr um eine Zeitnormierungseinrichtung für eine einzelne, konkrete Optimierungseinrichtung der gesamten MES-Vorrichtung. So ist es nämlich durchaus möglich, dass einzelne Komponenten der MES-Vorrichtung zu unterschiedlichen Zeiten angeschafft werden. Demnach muss einem Zeitnormierer 57 der Zeitnormierungseinrichtung 56 als Eingangsgröße 58 die Referenzzeit zugeführt werden, zu welcher die entsprechende Optimierungseinrichtung angeschafft worden ist. Bei der Eingangsgröße 59 der Figur 9 handelt es sich wieder um eine aktuelle Messzeit, und zwar individuell für jede einzelne Optimierungseinrichtung der gesamten MES-Vorrichtung, was in Figur 9 durch einen Pfeil 60 verdeutlicht wird. Bei der Eingangsgröße 61 gemäß Figur 9 handelt es sich wieder um eine Benutzereingabe zur Auswahl des Zeitnormierungsstandards in Tagen, Wochen, Monaten oder auch Jahren. Der Zeitnormierer 57 ermittelt dann aus den Eingangsgrößen 58, 59 und 61 eine Ausgangsgröße 62. Hierbei handelt es sich dann um eine Zeitnormierung individuell für jede Optimierungseinrichtung der MES-Vorrichtung.

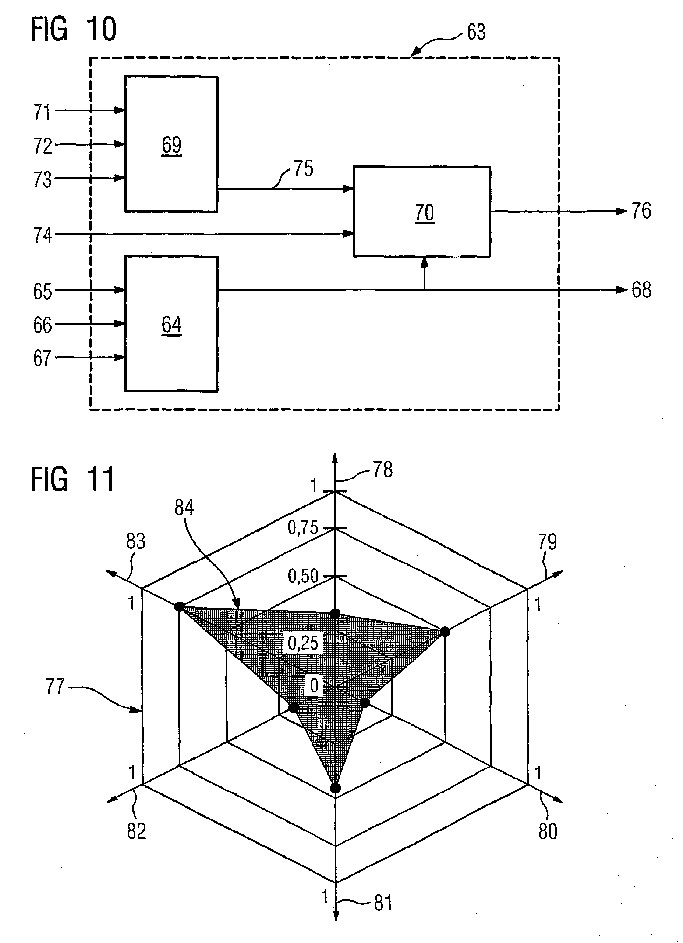

Zusätzlich zu einer Zeitnormierung wird auch eine Prozessgrößennormierung durchgeführt werden. Eine derartige Prozessgrößennormierungseinrichtung 63 zeigt Fig. 10. Die in Figur 10 gezeigte Prozessgrößennormierungseinrichtung 63 verfügt über eine Skalierungseinrichtung 64, der drei Eingangsgrößen 65, 66, 67 zugeführt werden. Bei der ersten Eingangsgröße 65 handelt es sich um einen aktuellen Messwert eines zu optimierenden Prozessparameters, bei der Eingangsgröße 66 um einen Referenzwert und bei der Eingangsgröße 67 um einen Normierungsfaktor. So kann es nämlich durchaus sein, dass die Eingangsgrößen 65 und 66 - also die Messwerte des Prozessparameters und die Referenzwerte desselben - in unterschiedlichen Einheiten vorliegen. Damit jedoch in den Auswerteeinrichtungen eine einheitliche Weiterverarbeitung der ermittelten Werte erfolgen kann, muss über den Normierungsfaktor die Einheit des aktuell gemessenen Werts des Prozessparameters an die Einheit des entsprechenden Referenzwerts angepasst werden. Insofern stellt die Skalierungseinrichtung 64 der Prozessgrößennormierungseinrichtung 63 eine Ausgangsgröße 68 bereit, die in den Auswerteeinrichtungen einheitlich weiter verarbeitet werden kann. Bei der Eingangsgröße 65 kann es sich zum Beispiel um den Messwert eines Prozessparameters handeln, der die Menge an eingespartem Rohmaterial zum Beispiel in Kilogramm wiedergibt. Liegt die Eingangsgröße 66, also ein Referenzwert für den Prozessparameter, zum Beispiel die Kosten je Mengeneinheit in einer anderen Einheit, zum Beispiel in Euro / Tonne vor, so muss über die dritte Eingangsgröße 67, den Normierungsfaktor eine Einheitenanpassung und damit Variablennormierung zwischen den aktuellen Messwerten der Prozessparameter und den entsprechenden Referenzwerten durchgeführt werden. Diese normierte Größe wird dann als Ausgangsgröße 68 bereit gestellt.

Für einen kontinuierlich ablaufenden Produktionsprozess wäre eine Prozessgrößennormierungseinrichtung 73 ausreichend, die die Skalierungseinrichtung 64 aufweist. Sollen mit der erfindungsgemäßen Vorrichtung jedoch auch sogenannten Batch-Prozesse optimiert, überwacht und ausgewertet werden können, so umfasst die Prozessgrößennormierungseinrichtung 63 zusätzlich zu der ersten Skalierungseinrichtung 64 eine zweite Skalierungseinrichtung 69 sowie eine dritte Skalierungseinrichtung 70. Auf die zweite Skalierungseinrichtung 69 wirken drei Eingangsgrößen 71, 72, 73 ein. Hieraus erzeugt die zweite Skalierunseinrichtung 69 eine Ausgangsgröße 75, die zusammen mit einer weiteren Eingangsgröße 74 der dritten Skalierungseinrichtung 70 bereit gestellt wird. Die dritte Skalierungseinrichtung 70 erzeugt dann aus diesen beiden Eingangsgrößen und dem Ausgangssignal der ersten Skalierungseinrichtung 64 eine weitere Ausgangsgröße 76 der Prozessgrößennormierungseinrichtung 63. Bei der Eingangsgröße 71 für die zweite Skalierungseinrichtung 69 handelt es sich um einen Zeitnormierungsstandard. Dieser kann in Tagen, Wochen, Monaten oder Jahren vorliegen. Bei der Eingangsgröße 62 handelt es sich um eine Referenzzeit. Bei der Eingangsgröße 73 um eine Anzahl von Batch-Ereignissen, die sich in dem jeweiligen Referenzzeitraum ereignet. Hieraus ermittelt die zweite Skalierungseinrichtung 69 eine Ausgangsgröße 75, welche die Anzahl der Batch-Prozesse für den jeweiligen Prozessparameter in einer normierten Zeit bereitstellt. Bei der Eingangsgröße 74 handelt es sich um eine Angabe darüber, ob ein Batch-Prozess oder ein kontinuierlich ablaufender Prozess für den entsprechenden Prozessparameter vorliegt. Liegt ein kontinuierlich ablaufender Prozess vor, so wird lediglich die Verarbeitung in der dritten Skalierungseinrichtung 70 ausgeschaltet. Nur dann, wenn ein sogenannter Batch-Prozess vorliegt, wird die dritte Skalierungseinrichtung 70 aktiviert und die Ausgangsgröße 76 ermittelt. In der dritten Skalierungseinrichtung 70 wird demnach aus der Ausgangsgröße 68 der ersten Skalierungseinrichtung 64 und der Ausgangsgröße 75 der zweiten Skalierungseinrichtung 69 eine Ausgangsgröße 76 ermittelt, welche wiederum normiert ist und damit von den Auswerteeinrichtungen weiter verarbeitet werden kann. Mit der in Figur 10 gezeigten Prozessgrößennormierungseinrichtung 63 lassen sich demnach alle Typen von Prozessparameter, egal in welcher Einheit sie gemessen werden und egal ob es sich hierbei um Prozessparameter eines kontinuierlich ablaufenden Prozesses oder eines Batch-Prozesses handelt, derart normieren, dass eine einheitliche Weiterverarbeitung in den Auswerteeinrichtungen erfolgen kann.

Mit einer im Detail nicht dargestellten Anzeigeeinrichtung der erfindungsgemäßen Vorrichtung bzw. der erfindungsgemäßen MES-Vorrichtung sind die online sowie in real-time ermittelten Optimierungswerte der einzelnen Prozessparameter bzw. die Gesamtoptimierung visualisierbar. So zeigt Figur 11 ein sogenanntes Spyder-Diagramm 77 zur dynamischen Visualisierung der bewirkten Optimierung. So umfasst das Spyder-Diagramm 77 gemäß Figur 11 insgesamt sechs Achsen 78, 79, 80, 81, 82 und 83. Jede Achse 78, 79, 80, 81, 82, 83 entspricht einer Optimierungseinrichtung der MES-Vorrichtung. Konkret wird für jede der sechs Optimierungseinrichtungen ein Return of Investment-Faktor visualisiert. Beträgt der Wert des Return of Investment-Faktors Eins, so bedeutet dies, dass die von der konkreten Optimierungseinrichtung bewirkte Optimierung des Prozesses dem Investmentwert der konkreten Optimierungseinrichtung entspricht. Mit anderen Worten hat eine Optimierungseinrichtung dann, wenn ihr Return of Investment-Faktor den Wert Eins beträgt, den Prozess durch Einsparungen oder Ertragssteigerungen so optimiert, dass genau die Investmentkosten der entsprechenden Optimierungseinrichtungen abgedeckt sind. Liegt der Return of Investment-Faktor unterhalb von Eins, so hat sich die konkrete Optimierungseinrichtung zum aktuellen Zeitpunkt noch nicht amortisiert. Ist der Return of Investment-Faktor jedoch größer als Eins, so sind die Investitionskosten der konkreten Optimierungseinrichtung durch die bewirkte Optimierung voll amortisiert und darüber hinaus wird durch die Optimierungseinrichtung ein erster tatsächlicher Profit bereit gestellt. In Figur 1 liegen sämtliche sechs Return of Investment-Faktoren der sechs Optimierungseinrichtungen noch unterhalb des Wertes von Eins. Keine der sechs Optimierungseinrichtungen hat demnach zu dem in Figur 11 dargestellten, aktuellen Zeitpunkt den sogenannten Break Even Point erreicht.

Wie ebenfalls in Figur 11 dargestellt ist, sind die einzelnen Return of Investment-Faktoren der sechs Optimierungseinrichtungen miteinander verbunden und spannen so eine Fläche 84 auf. Diese aufgespannte Fläche 84 entspricht dem Gesamt-Return of Investment aller Optimierungseinrichtungen der gesamten erfindungsgemäßen Vorrichtung. Insofern ist mit dem in Figur 11 gezeigten, dynamischen Spyder-Diagramm nicht nur die bewirkte Optimierung der einzelnen Optimierungseinrichtungen, sondern gleichzeitig auch die bewirkte Gesamtoptimierung visualisierbar.

An dieser Stelle soll darauf hingewiesen werden, dass die in Verbindung mit Figur 11 dargestellte Visualisierung des erzielten Optimierungserfolgs bzw. des erzielten Return of Investment dem Betrachter durch farbliche Unterlegung nochmals stärker verdeutlicht werden kann. So wird dann, wenn der aktuell erzielte Return of Investment-Faktor einer konkreten Optimierungseinrichtung kleiner als Eins ist, der entsprechende Wert im Spyder-Diagramm mit einem roten Punkt markiert. Liegt jedoch das Return of Investment bereits oberhalb des Werts von Eins, so wird im Spyder-Diagramm dieser Punkt grün markiert.

Gleiches gilt für die grafische Ausgestaltung der von den einzelnen Return of Investment-Faktoren aufgespannten Fläche. Ist die von den einzelnen Return of Investment-Faktoren der konkreten Optimierungseinrichtungen aufgespannte Fläche 84 kleiner als die Fläche, die im Spyder-Diagramm von den Punkten aufgespannt wird, die einem Return of Investment-Faktor von Eins entsprechen, so wird diese Fläche rot unterlegt. Dies würde bedeuten, dass sich die gesamte MES-Vorrichtung noch nicht amortisiert hat. Wird dieser Flächeninhalt jedoch überschritten, so wird die Fläche grün unterlegt, um anzuzeigen, dass sich die Gesamtinvestitionskosten der MES-Vorrichtung amortisiert haben.

An Stelle des obigen grafischen Spyder-Diagramms oder auch zusätzlich zum Spyder-Diagramm können die online sowie in real-time ermittelten Optimierungswerte der einzelnen Prozessparameter bzw. die Gesamtoptimierung auch numerisch visualisiert werden. Diese numerische Visualisierung in Form von Zahlwerten kann ebenfalls laufend - d.h. online sowie in real-time - aktualisiert werden.

Es soll darauf hingewiesen werden, dass die erfindungsgemäße Vorrichtung auch zur Simulation einer erzielbaren Prozessoptimierung verwendet werden kann. Nämlich dann, wenn nicht aktuell ermittelte Werte von überwachten Prozessparametern sondern simulierte Werte von Prozessparametern verwendet werden, so dient die erfindungsgemäße Vorrichtung der zur Simulation der erzielbaren Prozessoptimierung.

Diesbezüglich sei zur Vermeidung von Wiederholungen lediglich kurz ausgeführt, dass eine Vorrichtung zur Simulation einer erzielbaren Prozessoptimierung mindestens eine Optimierungseinrichtung zur simulierten Beeinflussung eines oder mehrerer Prozessparameter sowie mindestens eine Überwachungseinrichtung zur Überwachung des oder jeden simulierten Prozessparameters umfasst. Mindestens eine Auswerteeinrichtung dient der automatischen Ermittlung einer von der oder jeden Optimierungseinrichtung bewirkbaren Optimierung des oder jeden Prozessparameters. Jedem zu optimierenden Prozessparameter, der von einer oder mehreren Optimierungseinrichtungen simuliert beeinflusst wird, ist eine Auswerteeinrichtung zugeordnet ist, derart, dass von der Auswerteeinrichtung die von allen beteiligten Optimierungseinrichtungen bewirkbare Optimierung des jeweiligen Prozessparameters online sowie in real-time ermittelbar ist. Die oder jede Auswerteeinrichtung weist mindestens ein Auswertemodul zur automatischen Ermittlung einer von einer konkreten Optimierungseinrichtung bewirkbaren Optimierung des entsprechenden Prozessparameters auf. Alle Auswerteeinrichtungen sind auch hier mit einer Gesamtauswerteeinrichtung verbunden sind, derart, dass von der Gesamtauswerteeinrichtung die bewirkbare Gesamtoptimierung aller Prozessparameter ermittelbar ist.

Eine Vorrichtung zur Simulation einer erzielbaren Prozessoptimierung ist demnach völlig analog aufgebaut. Es kann daher auf die obigen Ausführungen sowie alle Ansprüche verwiesen werden, die Vorrichtung bzw. das Verfahren zur Prozessoptimierung betreffen.

## Patentansprüche

1. Manufacturing-Execution-System-Vorichtung zur Prozessoptimierung, mit Mitteln zum Schalten der Vorrichtung zwischen ein Unternehmens- und Produktionsplanungssystem und ein Kontroll- und Steuerungssystem, **gekennzeichnet durch** folgende Merkmale:
a) die Vorrichtung umfasst mindestens eine Optimierungseinrichtung (1, 2, 3) zur Beeinflussung eines oder mehrerer Prozessparameter des Kontroll- und Steuerungssystems,
b) die Vorrichtung umfasst mindestens eine Datenermittlungseinrichtung (33) zur Überwachung des oder jeden Prozessparameters,
c) die Vorrichtung umfasst mindestens eine Auswerteeinrichtung (4, 5, 6, 7) zur automatischen Ermittlung einer von der Optimierungseinrichtung (1, 2, 3) bewirkten Optimierung des oder jeden Prozessparameters.

2. Vorrichtung nach Anspruch 1,
**dadurch gekennzeichnet, dass**
das Unternehmens- und Produktionsplanungssystem eine Enterprise-Resource-Planning-Vorrichtung ist.

3. Vorrichtung nach Anspruch 1 oder 2,
**dadurch gekennzeichnet, dass**
das Kontroll- und Steuerungssystem eine Prozess-Leit-Technik-Vorrichtung ist.

4. Vorrichtung nach einem der vorhergehenden Ansprüche,
**dadurch gekennzeichnet, dass**
die mindestens eine Auswerteeinrichtung (4, 5, 6, 7) ein Mittel zur automatischen Ermittlung einer von jeden Optimierungseinrichtung (1, 2, 3) bewirkten Optimierung jedes Prozessparameters umfasst.

5. Vorrichtung nach einem der vorhergehenden Ansprüche,
**dadurch gekennzeichnet, dass**
jedem zu optimierenden Prozessparameter des Kontroll- und Steuerungssystems der von einer oder mehreren Optimierungseinrichtungen (1, 2, 3) beeinflusst wird, eine Auswerteeinrichtung (4, 5, 6, 7) zugeordnet ist, derart, dass von der Auswerteeinrichtung (4, 5, 6, 7) die von den entsprechenden Optimierungseinrichtungen (1, 2, 3) bewirkte Optimierung des jeweiligen Prozessparameters ermittelbar ist, sodass online und in real-time ein von der jeweiligen Optimierungseinrichtung (1, 2, 3) erzielter Return-Of-Investment-Wert ermittelbar ist.

6. Vorrichtung nach einem der vorhergehenden Ansprüche
**dadurch gekennzeichnet, dass**
die oder jede Auswerteeinrichtung (4, 5, 6, 7) mindestens ein Auswertemodul (8) zur automatischen Ermittlung eines von einer konkreten Optimierungseinrichtung (1, 2, 3) erzielten Return-Of-Investment-Werts des entsprechenden Prozessparameters aufweist.

7. Vorrichtung nach einem der vorhergehenden Ansprüche,
**dadurch gekennzeichnet, dass**
alle Auswerteeinrichtungen (4, 5, 6, 7 ) mit einer Gesamtauswerteeinrichtung verbunden sind, derart, dass von der Gesamtauswerteeinrichtung die bewirkte Gesamtoptimierung aller Prozessparameter, nämlich ein Gesamt-Return-Of-Investment-Wert der Vorrichtung, online sowie in real-time ermittelbar ist.

8. Vorrichtung nach einem der vorhergehenden Ansprüche,
**dadurch gekennzeichnet, dass**
eine Anzeigeeinrichtung die von den jeweiligen Optimierungseinrichtungen (1, 2, 3) erzielten Return-Of-Investment-Werte und gleichzeitig den Gesamt-Return-Of-Investment-Wert der Vorrichtung in einem dynamischen Spyder-Diagramm (77) online sowie in real-time visualisiert.

## Claims

1. Manufacturing Execution System device for optimising processes, comprising means for connecting the device between an enterprise and production planning system and a monitoring and control system, **characterised by** the following features:
a) the device comprises at least one optimisation entity (1, 2, 3) for influencing one or more process parameters of the monitoring and control system,
b) the device comprises at least one data determining entity (33) for monitoring the or each process parameter, and
c) the device comprises at least one evaluation entity (4, 5, 6, 7) for automatically determining an optimisation of the or each process parameter, said optimisation having been effected by the optimisation entity (1, 2, 3).

2. Device according to claim 1,
**characterised in that** the enterprise and production planning system is an Enterprise Resource Planning device.

3. Device according to claim 1 or 2,
**characterised in that** the monitoring and control system is a process instrumentation and control device.

4. Device according to one of the preceding claims,
**characterised in that** the at least one evaluation entity (4, 5, 6, 7) comprises a means for automatically determining an optimisation of each process parameter, said optimisation having been effected by each optimisation entity (1 , 2, 3).

5. Device according to one of the preceding claims,
**characterised in that** each process parameter of the monitoring and control system, which process parameter must be optimised and which process parameter is influenced by one or more optimisation entities (1, 2, 3), is assigned an evaluation entity (4, 5, 6, 7) such that the optimisation which is effected on the relevant process parameter by the corresponding optimisation entities (1, 2, 3) can be determined by the evaluation entity (4, 5, 6, 7), so that a Return of Investment value which is achieved by the relevant optimisation entity (1, 2, 3) can be determined online and in real time.

6. Device according to one of the preceding claims,
**characterised in that** the or each evaluation entity (4, 5, 6, 7) has at least one evaluation module (8) for automatically determining a Return of Investment value of the corresponding process parameter, said Return of Investment value being achieved by a specific optimisation entity (1, 2, 3).

7. Device according to one of the preceding claims,
**characterised in that** all evaluation entities (4, 5, 6, 7) are connected to an overall evaluation entity, such that the effected overall optimisation of all process parameters, namely an overall Return of Investment value of the device, can be determined online and in real time by the overall evaluation entity.

8. Device according to one of the preceding claims,
**characterised in that** a display entity simultaneously displays the Return of Investment values which have been achieved by the relevant optimisation entities (1, 2, 3) and the overall Return of Investment value of the device online and in real time in a dynamic spider diagram (77).

## Revendications

1. Installation manufacturing-execution-system d'optimisation de processus, comprenant des moyens de commutation du dispositif entre un système de planification d'entreprise et de production, un système de contrôle et de commande, **caractérisée par** les caractéristiques suivantes :
a) l'installation comprend au moins un dispositif ( 1, 2, 3 ) d'optimisation pour influencer un ou plusieurs paramètres de processus du système de contrôle et de commande,
b) l'installation comprend au moins un dispositif ( 33 ) de détermination de données pour contrôler le ou chaque paramètre de processus,
c) l'installation comprend au moins un dispositif ( 4, 5, 6, 7 ) d'exploitation pour déterminer automatiquement une optimisation du ou de chaque paramètre de processus provoquée par le dispositif ( 1, 2, 3 ) d'optimisation.

2. Installation suivant la revendication 1,
**caractérisée en ce que** le système d'entreprise et de production est une installation enterprise-resource-planning.

3. Installation suivant la revendication 1 ou 2,
**caractérisée en ce que** le système de contrôle et de commande est une installation de la technique de conduite de processus.

4. Installation suivant l'une des revendications précédentes,
**caractérisée en ce que** le au moins dispositif ( 4, 5, 6, 7 ) d'exploitation comprend un moyen de détermination automatique d'une optimisation de chaque paramètre de processus provoquée par chaque dispositif ( 1, 2, 3 ) d'optimisation.

5. Installation suivant l'une des revendications précédentes, **caractérisée en ce que** à chaque paramètre de processus à optimiser du système de contrôle et de commande, qui est influencé par un ou par plusieurs dispositifs ( 1, 2, 3 ) d'optimisation, est affecté un dispositif ( 4, 5, 6, 7 ) d'exploitation de manière à ce que l'optimisation du paramètre respectif de processus provoquée par les dispositifs ( 1, 2, 3 ) d'optimisation correspondante puisse être déterminée par le dispositif ( 4, 5, 6, 7 ) d'exploitation de manière à pouvoir déterminer en ligne en temps réel une valeur de retour sur investissement obtenue par le dispositif ( 1, 2, 3 ) d'optimisation respectif.

6. Installation suivant l'une des revendications précédentes, **caractérisée en ce que** le ou chaque dispositif ( 4, 5, 6, 7 ) d'exploitation a au moins un module ( 8 ) d'exploitation pour la détermination automatique d'une valeur de retour sur investissement du paramètre de processus correspondant, valeur qui est obtenue par un dispositif ( 1, 2, 3 ) concret d'optimisation.

7. Installation suivant l'une des revendications précédentes, **caractérisée en ce que** tous les dispositifs ( 4, 5, 6, 7 ) d'exploitation sont reliés à un dispositif d'exploitation global de manière à ce que l'optimisation globale accomplie de tous les paramètres de processus, à savoir une valeur globale d'un retour sur investissement de l'installation, puisse être déterminée en ligne ainsi qu'en temps réel par le dispositif global d'exploitation.

8. Installation suivant l'une des revendications précédentes,
**caractérisée en ce qu'**un dispositif d'affichage visualise en ligne ainsi qu'en temps réel les valeurs de retour sur investissement obtenues par les dispositifs ( 1, 2, 3 ) d'optimisation respectifs et en même temps la valeur globale de retour sur investissement de l'installation dans un diagramme ( 77 ) spyder dynamique.
